# EUROPÄISCHE PATENTSCHRIFT

(11) **EP 1 006 147 B1**
(45) Veröffentlichungstag und Bekanntmachung des Hinweises auf die Patenterteilung: **18.07.2001**
(21) Anmeldenummer: 99123225.7
(22) Anmeldetag: 25.11.1999
(51) Int. Cl.: C08K 9/10, C08J 3/12, C08J 3/24

(54) **Hitzehärtbare einkomponentige additionsvernetzende Siliconmassen**
One-component heat and addition-curable polysiloxane compositions
Compositions de polysiloxane à composant unique durcissables par la chaleur et par addition

(30) Priorität: 04.12.1998 DE 19851764
(43) Veröffentlichungstag der Anmeldung: 07.06.2000
(73) Patentinhaber: Wacker-Chemie GmbH, 81737 München (DE)
(72) Erfinder: Wörner, Christof, Dr., 84489 Burghausen (DE); Achenbach, Frank, Dr., 84489 Burghausen (DE); Ebenhoch, Jochen, Dr., 84489 Burghausen (DE)
(74) Vertreter: Fritz, Helmut, Dr.

(56) Entgegenhaltungen:
- EP-A- 0 347 895
- EP-A- 0 744 432
- US-A- 4 481 341
- US-A- 5 410 007

## Beschreibung

Die Erfindung betrifft Hydrosilylierungskatalysatoren enthaltende Organopolysiloxanpartikel und lagerstabile einkomponentige additionsvernetzende hitzehärtbare Siliconmassen.

In US-A-4,481,341, EP-A-661349 und US-A-5,525,425 sind Siliconharze beschrieben, die eine Glasübergangs-, Erweichungs- oder Schmelztemperatur besitzen. Diese Siliconharze können als Verkapselungsmaterialien für Hydrosilylierungskatalysatoren eingesetzt werden. Dazu werden die Siliconharze in einem organischen Lösungsmittel gelöst und mit einem Hydrosilylierungskatalysator versetzt. Die in einem Siliconharz verkapselten Hydrosilylierungskatalysatoren erhält man beispielsweise durch Entfernen des Lösungsmittels und anschließender Pulverisierung oder durch Sprühtrocknung der Katalysator-haltigen Siliconharzlösung. Mit Hilfe dieser verkapselten Katalysatoren können einkomponentige additionsvernetzende Siliconmassen hergestellt werden.

Der Nachteil dieser verkapselten Katalysatoren besteht darin, daß ein morphologischer Aufbau der Siloxanpartikel mit unterschiedlichen Siloxanbausteinen nicht möglich ist. Damit können keine Kern-Schale-Strukturen hergestellt bzw. die Oberflächenzusammensetzung nicht gezielt eingestellt werden, so daß eine Beeinflussung der Verträglichkeit bzw. Dispergierbarkeit in der Siliconmasse durch Variation der Partikeloberflächenzusammensetzung nicht möglich ist. Ebenso besteht die Gefahr, daß der verkapselte Katalysator ungewollt, aufgrund der Temperaturerhöhung beim Compoundieren, sehr schnell nach Erreichen der Erweichungs- bzw. Glasübergangstemperatur freigesetzt wird und damit die Siliconmasse beim Compoundieren vorzeitig vernetzt.

Es bestand die Aufgabe, Hydrosilylierungskatalysator enthaltende Organopolysiloxanpartikel bereitzustellen, mit deren Hilfe lagerstabile Einkomponenten-Siliconmassen hergestellt werden können.

Gegenstand der Erfindung sind Hydrosilylierungskatalysator (H) und Organopolysiloxan (O) enthaltende Organopolysiloxanpartikel mit einer Partikelgröße von 0,01 - 10 µm, die zumindest in der äußersten Schale keine Glasübergangs-, Erweichungs- und Schmelztemperatur im Bereich von 20 - 250°C aufweisen.

Die Organopolysiloxanpartikel sind in additionsvernetzbaren Siliconmassen gut dispergierbar.
Es wurde gefunden, daß solche Hydrosilylierungskatalysatoren (H) enthaltende Organopolysiloxanpartikel, obwohl diese zumindest in der äußersten Schale keine Glasübergangs-, Schmelz- und Erweichungstemperatur im Bereich von 20-250°C in der DSC zeigen, in der Lage sind, den Katalysator (H) bereits bei Temperaturen unterhalb von 250°C freizusetzen, so daß diese verkapselten Hydrosilylierungskatalysatoren (H) die Herstellung lagerstabiler einkomponentiger additionsvernetzender hitzehärtbarer Siliconmassen ermöglichen. Aufgrund der morphologischen Vielfalt und Variation der Siloxanbausteine in solchen Organopolysiloxanpartikeln gelingt es, die Freisetzung des Katalysators, d.h. die Vernetzungscharakteristik und die Topfzeit additionsvernetzender Siliconmassen, sowie die Dispergierbarkeit der Siloxanpartikel in der Siliconmasse gezielt einzustellen.

Die Organopolysiloxanpartikel können durchgehend homogen sein und nur aus einem Kern bestehen oder aus Kern und Schale(n), ähnlich einer Zwiebel aufgebaut sein. Falls die Organopolysiloxanpartikel aus Kern und Schale(n) aufgebaut sind, fallen auf die äußerste Schale mindestens 0,1, insbesondere mindestens 0,5 Gew.-% bezogen auf die gesamten Organopolysiloxanpartikel. Die Zusammensetzungen von Kern und Schale(n) können sich beispielsweise durch ihren Gehalt an Hydrosilylierungskatalysatoren (H) und/oder der Art ihres Organopolysiloxanbestandteils (O) unterscheiden.

Das Organopolysiloxan (O) der Organopolysiloxanpartikel ist aufgebaut aus
0 bis 40,0 Gew.-% Einheiten der allgemeinen Formel

   [R₃SiO_{1/2}] **(1),**
0 bis 95,0 Gew.-% Einheiten der allgemeinen Formel

   [R₂SiO_{2/2}] **(2),**
0 bis 100 Gew.-% Einheiten der allgemeinen Formel

   [RSiO_{3/2}] **(3),**

   und
0 bis 60,0 Gew.-% Einheiten der allgemeinen Formel

   [SiO_{4/2}] **(4),**
wobei
- **R**: gleiche oder verschiedene einwertige SiC-gebundene, gegebenenfalls substituierte C1- bis C18- Kohlenwasserstoffrestebedeutet,
mit der Maßgabe, daß 10 bis 98 Mol- % der Reste R aus Phenylgruppen bestehen und daß in den Einheiten der allgemeinen Formeln (1) bis (4) zusammen höchstens 10 Gew.-%, insbesondere höchstens 5 Gew.-% nicht kondensierte Reste ≡Si-OH und nicht hydrolysierte Reste ≡Si-OR¹ vorhanden sein können, wobei
- **R**^{**1**}: gleiche oder verschiedene einwertige SiOC-gebundene, gegebenenfalls substituierte C₁- bis C₈- Kohlenwasserstoffoxyreste bedeutet.

Vorzugsweise beträgt die Summe der Einheiten der allgemeinen Formeln (3) und (4) mindestens 5,0 insbesondere mindestens 10,0 Gew.-%.

Dabei bezieht sich die angegebene Summe der Einheiten auf die Gesamtzusammensetzung des Organopolysiloxanbestandteils (O), der gegebenenfalls aus Kern und Schale(n) unterschiedlicher Zusammensetzung bestehen kann. Die Partikel können beispielsweise auch einzelne Schalen aufweisen, die weniger als 5,0 Gew.-% Einheiten der allgemeinen Formeln (3) und (4) aufweisen.

Vorzugsweise enthält das Organopolysiloxan der Organopolysiloxanpartikel
0,5 bis 20 Gew.-% Einheiten der allgemeinen Formel (1),
0 bis 75 Gew.-% Einheiten der allgemeinen Formel (2),
5 bis 99 Gew.-% Einheiten der allgemeinen Formel (3)und
0 bis 40 Gew.-% Einheiten der allgemeinen Formel (4).

Beispiele für unsubstituierte Kohlenwasserstoffeste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest, sowie der Fluorenylrest.

Beispiele für substituierte Kohlenwasserstoffreste als Reste **R** sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

Bei dem Kohlenwasserstoffest **R** handelt es sich bevorzugt um unsubstituierte und substituierte C₁- bis C₆-Alkylreste und den Phenylrest, insbesondere um den Methyl-, Phenyl- und Vinyl-Rest.

Ebenfalls bevorzugt ist, wenn 10-98 Mol-% der Reste Kohlenwasserstoffeste **R** aus Phenylgruppen und, 2-25 Mol% der Reste Kohlenwasserstoffeste **R** aus Vi-Gruppen bestehen.

Bei dem Kohlenwasserstoffoxyrest **R**^{**1**} handelt es bevorzugt um unsubstituierte und substituierte C₁- bis C₆-Alkoxyreste und den Phenoxyrest, insbesondere um den Methoxy- und Ethoxyrest.

Als Hydrosilylierungskatalysator (H) können alle bekannten Katalysatoren eingesetzt werden, welche die bei der Vernetzung. von additionsvernetzenden Siliconmassen ablaufenden Hydrosilylierungsreaktionen katalysieren. Als Hydrosilylierungskatalysatoren (H) können insbesondere Metalle und deren Verbindungen, wie Platin, Rhodium, Palladium, Ruthenium und Iridium, vorzugsweise Platin, eingesetzt werden. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Das Gewicht an Metall, welches im Hydrosilylierungskatalysator (H) vorliegt, beträgt vorzugsweise 0,01-4 Gew.-% bezogen auf das Gewicht der Partikel.

Die Organopolysiloxanpartikel können beispielsweise nach dem in der EP-A-744432 beschriebenen Verfahren hergestellt werden.

Ein weiterer Gegenstand der Erfindung ist ein Verfahren zur Herstellung der Organopolysiloxanpartikel, bei dem in einem ersten Schritt durch Zudosieren von Silanen der allgemeinen Formel (5)

R_{c}Si(OR¹)_{4-c} **(5),**

und gegebenenfalls siliciumorganischen Verbindungen der allgemeinen Formel (6)

R_{d}(R¹O)ₑSiO_{4-d-e/2} **(6),**

wobei
- **R**^{**1**}: die vorstehenden Bedeutungen aufweisen,
- **c**: die Werte 0, 1, 2 oder 3 und
- **d** und **e**: jeweils unabhängig voneinander die Werte 0, 1, 2, 3 oder 4 bedeuten,
zu einer bewegten Mischung aus Emulgator und Wasser eine kolloidale Suspension von Organopolysiloxanpartikeln hergestellt wird.

Die Zugabe der siliciumorganischen Verbindungen der allgemeinen Formel (6) kann auch sequenziell erfolgen, so daß ein morphologischer Aufbau von Kern-Schale(n)-Strukturen möglich ist.

In einem zweiten Schritt wird die kolloidale Suspension mit siliciumorganischer Verbindung der allgemeinen Formel (7)

(R² ₃Si)_{f}Y¹ **(7),**

versetzt, wobei
- **Y**^{**1**}: für die Bedeutungen **f** = 1 -OH, -OR³, -ONR³₂ oder -OOCR³ und für die Bedeutungen **f** = 2 -O- bedeutet,
- **R**^{**3**}: gegebenenfalls substituierte C₁- bis C₈- Kohlenwasserstoffreste bedeutet,
- **R**^{**2**}: die Bedeutungen von **R** aufweist und
- **f**: die Werte 1 oder 2 aufweisen,
mit der Maßgabe, daß der Hydrosilylierungskatalysator (H) vor, während oder nach dem Aufbau der Organopolysiloxanpartikel in die Mischung aus Emulgator und Wasser gegeben wird.

Beispiele für Reste **R**^{**3**} sind vorstehend für Reste **R** aufgeführt.

Die Isolierung der Organopolysiloxanpartikel aus den erhaltenen kolloidalen Suspensionen kann beispielsweise durch Koagulation der Latices mittels Salzzugabe, durch Zugabe von polaren Lösungsmitteln oder durch Sprühtrocknungsverfahren erfolgen.

Es besteht auch die Möglichkeit, die beispielsweise nach EP-A-744432 hergestellten Organopolysiloxanpartikel, die noch keinen Hydrosilylierungskatalysator (H) enthalten, in einem Lösungsmittel zu lösen, mit einem Hydrosilylierungskatalysator (H) zu versetzen und anschließend durch Entfernen des Lösungsmittels oder durch Sprühtrocknung in Organopolysiloxanpartikeln verkapselte Hydrosilylierungskatalysatoren (H) zu erhalten.

Das Verfahren ermöglicht die Herstellung von Organopolysiloxanpartikeln, die einen gezielten morphologischen Aufbau aufweisen, beispielsweise mit unterschiedlichen Schichtstrukturen, so daß gezielt Kern-Schale-Morphologien mit einer oder mehreren Schalen definierter Kern-, Schalen- und Partikeloberflächen-Zusammensetzung generiert werden können. Damit kann die Dispergierbarkeit dieser Organopolysiloxanpartikel in Siliconmassen zielgerichtet eingestellt werden. z.B. kann durch Oberflächenmodifizierung mit Trialkylsilylgruppen die Dispergierbarkeit und Einarbeitbarkeit der Organopolysiloxanpartikel in Siliconmassen erheblich verbessert werden.

Es ist ebenso möglich, daß der Hydrosilylierungskatalysator (H) bereits während der Organopolysiloxanpartikelsynthese hinzugefügt wird (in-situ Verkapselung), so daß der Verfahrensschritt einer nachträglichen Verkapselung entfallen kann. Außerdem kann durch den Aufbau von Kern-Schale-Strukturen der Aufenthaltsort des Hydrosilylierungskatalysators (H) in den Organopolysiloxanpartikeln bestimmt werden. Die Verkapselung des Hydrosilylierungskatalysators (H) kann auch im Anschluß an die Organopolysiloxanpartikelherstellung erfolgen. Dabei werden die Organopolysiloxanpartikel-haltigen Materialien in einem Lösungsmittel dispergiert und ein Hydrosilylierungskatalysator (H) hinzugefügt. Durch Entfernen des Lösungsmittels werden die verkapselten Hydrosilylierungskatalysatoren (H) erhalten. Das Entfernen des Lösungsmittels kann auch durch Sprühtrocknungsverfahren erfolgen. Unabhängig von der Herstellungsvariante kann der Anteil an auf der Organopolysiloxanpartikeloberfläche befindlichem Hydrosilylierungskatalysator (H), der nicht verkapselt ist, durch Waschen mit einem Lösungsmittel oder Siliconöl, in welchem der Katalysator löslich ist, entfernt werden.

Die Organopolysiloxanpartikel können zusätzlich noch einen bei additionsvernetzenden Siliconmassen üblichen Inhibitor, wie z.B. Ethinylcyclohexanol, enthalten. Dieser kann wie vorstehend der Hydrosilylierungskatalysator (H) bei der Herstellung der Organopolysiloxanpartikel bei den beschriebenen Verfahrensschritten oder im Anschluß an die Partikelsynthese durch Lösen der Partikel in einem organischen Lösungsmittel, Hinzufügen des Inhibitors und anschließendem Entfernen des Lösungsmittels eingebracht werden.

Gegenstand der Erfindung ist auch eine einkomponentige additionsvernetzende hitzehärtbare Siliconmasse, welche die Bestandteile
(I) alkenylfunktionelles Polyorganosiloxan
(II) SiH-funktionelles Vernetzungsmittel und
(III) die vorstehenden Hydrosilylierungskatalysatoren (H) und Organopolysiloxan (O) enthaltenden Organopolysiloxanpartikel umfaßt.

Der Gehalt an Hydrosilylierungskatalysatoren (H) enthaltenden Organopolysiloxanpartikeln wird so gewählt, daß die additionsvernetzende Siliconmasse einen Pt-Gehalt von 0,1-100 ppm, bevorzugt von 0,5-40 ppm besitzt.

Bestandteil (I) der Siliconmasse ist ein mindestens zwei Alkenylgruppen pro Molekül enthaltendes Polyorganosiloxan mit vorzugsweise einer Viskosität bei 25°C von 0,1 bis 500 000 Pa·s, insbesondere von 1 bis 100 Pa·s.

Die Zusammensetzung des Alkenylgruppen enthaltenden Polyorganosiloxans (I) entspricht vorzugsweise der durchschnittlichen allgemeinen Formel (9)

R⁴ ₓR⁵ _{y}SiO_{(4-x-y)/2} (9),

in der
- **R**^{**4**}: gleiche oder verschiedene einwertige, gegebenenfalls halogen- oder cyanosubstituierte, gegebenenfalls über eine organische zweiwertige Gruppe an Silicium gebundene C₁-C₁₀-Kohlenwasserstoffreste, die aliphatische Kohlenstoff-Kohlenstoff Mehrfachbindungen enthalten,
- **R**^{**5**}: gleiche oder verschiedene einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff Mehrfachbindungen
- **x**: eine solche nichtnegative Zahl, daß mindestens zwei Reste **R**^{**4**} in jedem Molekül vorhanden sind, und
- **y**: eine nicht negative Zahl, so daß **(x+y)** im Bereich von 1.8 bis 2.5 liegt, bedeuten.

Die Alkenylgruppen **R**^{**4**} sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R**^{**4**} an Silicium der Polymerkette gebunden sein können, bestehen beispielsweise aus Oxyalkyleneinheiten, wie solche der allgemeinen Formel (10)

- (O)ₘ[(CH₂)ₙO]ₒ- (10),

in der
- **m**: die Werte 0 oder 1, insbesondere 0,
- **n**: Werte von 1 bis 4, insbesondere 1 oder 2 und
- **o**: Werte von 1 bis 20, insbesondere von 1 bis 5 bedeuten.

Die Oxyalkyleneinheiten der allgemeinen Formel (10) sind links an ein Siliciumatom gebunden.

Die Reste **R**^{**4**} können in jeder Position der Polymerkette, insbesondere an den endständigen Siliciumatomen, gebunden sein.

Beispiele für Reste **R**^{**5**} sind vorstehend für Reste **R** aufgeführt.
- **R**^{**5**}: weist vorzugsweise 1 bis 6 Kohlenstoffatome auf. Insbesondere bevorzugt sind Methyl und Phenyl.

Bestandteil (I) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear, cyclisch oder auch verzweigt sein. Der Gehalt an zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (11)

(ViMe₂SiO_{1/2})₂(ViMeSiO)ₚ(Me₂SiO)_{q} (11),

entsprechen, wobei die nichtnegativen ganzen Zahlen p und q folgende Relationen erfüllen: **p**≥0, 50<**(p+q)**<20000, vorzugsweise 200<**(p+q)**<1000, und 0<(p+1)/**(p+q)**<0.2.

Bestandteil (II) der Siliconmasse ist ein SiH-funktionelles Vernetzungsmittel, dessen Zusammensetzung der nachfolgenden durchschnittlichen Formel (12) entspricht

HₕR⁶ ᵢSiO_{(4-h-i)/2} (12),

in der
- **R**^{**6**}: die Bedeutungen von **R**^{**5**} haben und
- **h** und **i**: nichtnegative ganze Zahlen mit der Maßgabe sind, daß 0.5<**(h+i)**<3,0 und 0<**h**<2, so daß mindestens zwei siliciumgebundene Wasserstoffatome pro Molekül vorhanden sind.

Bevorzugt ist die Verwendung eines drei oder mehr SiH-Bindungen pro Molekül enthaltenden Vernetzungsmittels (II). Bei Verwendung eines nur zwei SiH-Bindungen pro Molekül aufweisenden Agens, empfiehlt sich die Verwendung eines Alkenylgruppen enthaltenden Polyorganosiloxans (I), das über mindestens drei Alkenylgruppen pro Molekül verfügt.

Der Wasserstoffgehalt des Vernetzungsmittels (II), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Der SiH-funktionelle Vernetzer (II) enthält vorzugsweise mindestens drei und höchstens 600 Siliciumatome pro Molekül. Bevorzugt ist die Verwendung von SiH-Vernetzern (II), die 4 bis 200 Siliciumatome pro Molekül enthalten.

Die Struktur des SiH-Vernetzers (II) kann linear, verzweigt, cyclisch oder netzwerkartig sein.

Besonders bevorzugte SiH-Vernetzer sind lineare Polyorganosiloxane der allgemeinen Formel (13)

(HR⁷ ₂SiO_{1/2})ⱼ(R⁷ ₃SiO_{1/2})ₖ(HR⁷SiO_{2/2})₁(R⁷ ₂SiO_{2/2})ₘ (13),

wobei
- **R**^{**7**}: die Bedeutungen von **R**^{**5**} haben und die nichtnegativen ganzen Zahlen **j, k, l** und **m** folgende Relationen erfüllen: (j**+k**)=2, (**j+l**)>2, 5<(**l+m**)<200 und 1<**l**/(**l+m**)<0.1.

Der SiH-funktionelle Vernetzer ist vorzugsweise in einer solchen Menge in der vernetzbaren Siliconkautschukmasse enthalten, daß das Molverhältnis von SiH-Gruppen zu Alkenylgruppen bei 0,5 bis 5, insbesondere bei 1,0 bis 3,0 liegt.

Um eine ausreichend hohe mechanische Festigkeit des Siliconkautschuks zu erzielen, ist es bevorzugt, aktiv verstärkende Füllstoffe als Bestandteil (IV) in die Siliconkautschukmasse einzuarbeiten. Als aktiv verstärkende Füllstoffe (IV) werden vor allem gefällte und pyrogene Kieselsäuren, sowie Gemische derselben verwendet. Die spezifische Oberfläche dieser aktiv verstärkenden Füllstoffe sollte mindestens 50 m²/g betragen oder vorzugsweise im Bereich von 100 bis 400 m²/g gemäß der Bestimmung nach der BET-Methode liegen. Derartige aktiv verstärkende Füllstoffe sind auf dem Gebiet der Siliconkautschuke sehr gut bekannte Materialien.

Der Gehalt der vernetzbaren Siliconkautschukmasse an aktiv verstärkendem Füllstoff (IV) liegt im Bereich von 0 bis 60 Gew.-%, vorzugsweise bei 10 bis 40 Gew.-%.

Die erfindungsgemäße Siliconkautschukmasse kann wahlweise als Bestandteil (V) weitere Zusätze zu einem Anteil von bis zu 70 Gew.-%, vorzugsweise von 0,01 bis 40 Gew.-%, enthalten. Diese Zusätze können z.B. Füllstoffe, Dispergierhilfsmittel, Haftvermittler, Inhibitoren, Pigmente, Farbstoffe, Weichmacher, Hitzestabilisatoren usw. sein.

Die Compoundierung der Siliconmassen erfolgt durch Mischen der oben aufgeführten Komponenten in beliebiger Reihenfolge. Bevorzugt werden die den Hydrosilylierungskatalysator enthaltenden Organopolysiloxanpartikel (III) als letzter Bestandteil der additionsvernetzenden Siliconmasse hinzugefügt. Die Organopolysiloxanpartikel (III) können auch zuerst in einem Diorganopolysiloxan oder einem füllstoffhaltigen Diorganopolysiloxan dispergiert werden und anschließend der additionsvernetzenden Siliconmasse hinzugefügt werden.

Die additionsvernetzenden Siliconmassen können eine Topfzeit bei Raumtemperatur von mehreren Monaten besitzen und bei höheren Temperaturen eine schnelle Vernetzungscharakteristik aufweisen.

Die vorstehend beschriebenen Siliconmassen eignen sich für alle denkbaren Formteile und Einsatzgebiete, in denen additionsvernetzte Siliconelastomere eingesetzt werden, z.B. auch für Dichtungsformteile.

In den nachfolgenden Beispielen sind, falls jeweils nicht anders angegeben,
a) alle Drücke 0,10 MPa (abs.);
b) alle Temperaturen 20° C .

### Beispiele:

### Beispiel 1 (nicht erfindungsgemäß; Herstellung eines Platin-Vinylsiloxan-Komplexes)

3,0 g einer wäßrigen Hexachloroplatinsäure-Lösung mit einem Pt-Gehalt von 32% und 9,2 g 1,3-Divinyltetramethyldisiloxan wurden in 15 g Isopropylalkohol und 27 g Toluol gelöst, 5,6 g Natriumhydrogencarbonat hinzugefügt und unter Rühren 30 Minuten auf 80°C erhitzt. Nach dem Abkühlen, Beseitigung des Rückstands sowie Entfernen des Alkohols im Vakuum wurde eine toluolische Lösung des Platin-1,3-Divinyltetramethyldisiloxan-Komplexes mit einem Pt-Gehalt von 2,6% erhalten.

### Beispiel 2

Zu einer Vorlage aus 298,8 g Wasser, 1,2 g Natriumlaurylsulfat und 0,7 g 10-normaler NaOH wurde unter Rühren im Verlauf von 12 Stunden bei 85°C eine Mischung aus 40,9 g Phenyltriethoxysilan, 4,9 g Vinyltriethoxysilan und 8,8 g Methyltrimethoxysilan zudosiert. Die entstandene Suspension wurde bei Raumtemperatur mit 0,2 normaler HCl-Lösung auf einen pH von 2 eingestellt, 19,9 g Hexamethyldisiloxan bei 60°C hinzugegeben und im

Anschluß daran 4 Stunden gerührt. Nach der Neutralisation mit 0,2 normaler NaOH bei Raumtemperatur wurden 3,6 g des in Beispiel 1 hergestellten Platin-1,3-Divinyltetramethyldisiloxan-Komplexes hinzugefügt und 1 h gerührt. Nach dem Entfernen der organischen Lösungsmittel im Vakuum wurde die Suspension durch Zugabe von 600 ml Methanol gebrochen. Der ausgefallene Feststoff wurde abfiltriert, mehrmals mit Methanol und Hexamethyldisiloxan gewaschen und im Hochvakuum getrocknet. Es wurden 28,1 g eines weißen Pulvers, das aus [CH₃SiO_{3/2}]-, [C₆H₅SiO_{3/2}]-, [C₂H₃SiO_{3/2}]- und [(CH₃)₃SiO_{1/2}]-Einheiten aufgebaut ist, erhalten. Mittels Rasterelektronen-Mikroskopie wurde ein mittlerer Partikelradius von 26 nm ermittelt. Mit Hilfe der DSC (Differential Scanning Calorimetry) konnte bei einer Aufheizgeschwindigkeit von 10 K/min keine Glasübergangs- bzw. Schmelztemperatur im Bereich von 20-260°C beobachtet werden. Auch bei der Schmelzpunktsbestimmung in einem Glasröhrchen konnte kein Erweichungs- bzw. Schmelzpunkt festgestellt werden. Der Platingehalt der Siloxanpartikel betrug 0,20 Gew.-%.

### Beispiel 3

Zu einer Vorlage aus 298,8 g Wasser, 1,2 g Natriumlaurylsulfat und 0,7 g 10-normaler NaOH wurde unter Rühren innerhalb von 12 Stunden bei 85°C eine Mischung aus 44,0 g Phenyltriethoxysilan, 3,9 g Vinyltriethoxysilan und 7,7 g Methyltrimethoxysilan zudosiert. Die entstandene Suspension wurde bei Raumtemperatur mit 0,2 normaler HCl-Lösung auf einen pH von 2 eingestellt, 19,9 g Hexamethyldisiloxan bei 60°C hinzugegeben und im Anschluß daran 4 Stunden gerührt. Durch Ausschütteln der wässrigen Suspension mit 300 ml Toluol wurden die Siloxanpartikel in die organische Phase überführt. Nach dem Abtrennen wurden der organischen Phase 3,6 g des in Beispiel 1 hergestellten Platin-1,3-Divinyltetramethyldisiloxan-Komplexes hinzugefügt und 1 h gerührt. Durch Entfernen des organischen Lösungsmittels im Vakuum und darauffolgendem mehrfachem Waschen der Siloxanpartikel mit Hexamethyldisiloxan wurden 25,2 g eines weißen Pulvers erhalten, das aus [CH₃SiO_{3/2}]-, [C₆H₅SiO_{3/2}]-, [C₂H₃SiO_{3/2}]- und [(CH₃)₃SiO_{1/2}]-Einheiten aufgebaut ist. Mittels Rasterelektronen-Mikroskopie wurde ein mittlerer Partikelradius von 24 nm ermittelt. Mit Hilfe der DSC konnte keine Glasübergangs- bzw. Schmelztemperatur im Bereich von 20-260°C bei einer Aufheizgeschwindigkeit von 10 K/min beobachtet werden. Auch bei der Schmelzpunktsbestimmung in einem Glasröhrchen konnte kein Erweichungs- bzw. Schmelzpunkt beobachtet werden. Der Platingehalt der Partikel betrug 0,34 Gew.-%.

### Beispiel 4

Im Unterschied zu Beispiel 2 wurde eine Mischung aus 29,3 g Phenyltriethoxysilan und 21,7 g Methyltrimethoxysilan verwendet. Es wurden 24,4 g eines weißen Pulvers erhalten, das aus [CH₃SiO_{3/2}]-, [C₆H₅SiO_{3/2}]- und [(CH₃)₃SiO_{1/2}]-Einheiten aufgebaut ist. Die erhaltenen Siloxanpartikel mit einem mittleren Partikeldurchmesser von 29 nm zeigten keinen Erweichungs- bzw. Schmelzpunkt im Temperaturbereich von 20-260°C. Der Pt-Gehalt betrug 0,14%.

### Beispiel 5

Die Synthese erfolgte in Anlehnung an das Beispiel 3, mit dem Unterschied, daß auf die Dosierung von Hexamethyldisiloxan zu der Suspension verzichtet wurde. Es wurden 25,1 g eines weißen Pulvers erhalten, das aus [CH₃SiO_{3/2}]-, [C₆H₅SiO_{3/2}]- und [C₂H₃SiO_{3/2}]-Einheiten aufgebaut ist. Die erhaltenen Siloxanpartikel mit einem mittleren Partikeldurchmesser von 25 nm zeigten keinen Erweichungs- bzw. Schmelzpunkt im Temperaturbereich von 20-260°C. Der Pt-Gehalt betrug 0,36%.

### Beispiel 6

Im Unterschied zu Beispiel 2 wurde eine Mischung aus 40,9 g Phenyltriethoxysilan, 4,9 g Vinyltriethoxysilan, 5,7 g Tetraethoxysilan und 5,3 g Methyltrimethoxysilan verwendet. Es wurden 26,2 g eines weißen Pulvers erhalten, das aus [CH₃SiO_{3/2}]-, [SiO_{4/2}]-, [C₆H₅SiO_{3/2}]-, [(CH₃)₃SiO_{1/2}]- und [C₂H₃SiO_{3/2}]-Einheiten aufgebaut ist. Die erhaltenen Siloxanpartikel mit einem mittleren Partikeldurchmesser von 30 nm zeigten keinen Erweichungs- bzw. Schmelzpunkt im Temperaturbereich von 20-260°C. Der Pt-Gehalt betrug 0,21%.

### Beispiel 7

Im Unterschied zu Beispiel 2 wurde nach der Dosierung der Alkoxysilanmischung, bestehend aus 40,9 g Phenyltriethoxysilan, 4,9 g Vinyltriethoxysilan und 8,8 g Methyltrimethoxysilan, zusätzlich innerhalb von 2 h bei 85°C eine Mischung aus 4,1 g Phenyltriethoxysilan und 0,9 g Methyltrimethoxysilan hinzugefügt. Es wurden 29,4 g eines weißen Pulvers erhalten, das aus [CH₃SiO_{3/2}]-, [C₆H₅SiO_{3/2}]-, [(CH₃)₃SiO_{1/2}]- und [C₂H₃SiO_{3/2}]- Einheiten aufgebaut ist. Die erhaltenen Siloxanpartikel mit einem mittleren Partikeldurchmesser von 31 nm zeigten keinen Erweichungs- bzw. Schmelzpunkt im Temperaturbereich von 20-260°C. Der Pt-Gehalt betrug 0,22%.

### Beispiel 8

In einem Laborkneter wurden 255 Masseteile eines vinyldimethylsiloxy-terminierten Polydimethylsiloxans mit einer Viskosität von 20 Pa^{*}s (25°C) vorgelegt, auf 150°C aufgeheizt und mit 180 Masseteilen einer hydrophoben pyrogenen Kieselsäure mit einer spezifischen Oberfläche nach BET von 300 m²/g und einem Kohlenstoffgehalt von 3,9 Gew.-% versetzt. Es entstand eine hochviskose Masse, die anschließend mit 165 Masseteilen des obengenannten Polydimethylsiloxans verdünnt wurde. Durch Kneten unter Vakuum (10 mbar) bei 150°C wurden innerhalb einer Stunde flüchtige Bestandteile entfernt.

488 g dieser Grundmasse wurden auf einer Walze bei einer Temperatur von 25°C mit 0,30 g Ethinylcyclohexanol, 11,0 g SiH-Vernetzer und 1,25 g Pt-haltige Siloxanpartikel aus Beispiel 2 zu einer Siliconmasse vermischt, wobei es sich bei dem SiH-Vernetzer um ein Mischpolymerisat aus Dimethylsiloxy-, Methylhydrogensiloxy- und Trimethylsiloxy-Einheiten mit einer Viskosität von 320 mPa^{*}s bei 25°C und einem Gehalt an Sigebundenem Wasserstoff von 0,48 Gew.-% handelte. Der Pt-Gehalt der Siliconmasse betrug 5 ppm.

### Beispiel 9

Die Herstellung erfolgte wie im Beispiel 8 beschrieben, jedoch wurden 0,735 g der in Beispiel 3 hergestellten Pt-haltigen Siloxanpartikel verwendet.

### Beispiel 10

Die Herstellung erfolgte wie im Beispiel 8 beschrieben, jedoch wurden 1,79 g der in Beispiel 4 hergestellten Pt-haltigen Siloxanpartikel verwendet.

### Beispiel 11

Die Herstellung erfolgte wie im Beispiel 8 beschrieben, jedoch wurden 0,694 g der in Beispiel 5 hergestellten Pt-haltigen Siloxanpartikel verwendet.

### Beispiel 12

Die Herstellung erfolgte wie im Beispiel 8 beschrieben, jedoch wurden 1,19 g der in Beispiel 6 hergestellten Pt-haltigen Siloxanpartikel verwendet.

### Beispiel 13

Die Herstellung erfolgte wie im Beispiel 8 beschrieben, jedoch wurden 1,14 g der in Beispiel 7 hergestellten Pt-haltigen Siloxanpartikel verwendet.

### Beispiel 14 (nicht erfindungsgemäß)

Die Herstellung erfolgte wie im Beispiel 8 beschrieben, jedoch wurden 96 mg des in Beispiel 1 hergestellten Platin-Divinyltetramethyldisiloxan-Komplexes verwendet.

### Beispiel 15

589 Masseteile eines vinyldimethylsiloxy-terminierten Polydimethylsiloxans, das eine Brabender-Plastizität von 630 daNm, entsprechend einer mittleren Molmasse von ca. 500000 g/mol, aufweist, wurden portionsweise mit 253 Masseteilen einer hydrophoben pyrogenen Kieselsäure mit einer Oberfläche nach BET von 300m²/g und einem Kohlenstoffgehalt von 3,9 Gew.-% 4 Stunden in einem Kneter zu einer homogenen Masse vermischt.

492 g dieser Grundmasse wurden auf einer Walze bei einer Temperatur von 20°C mit 0,30 g Ethinylcyclohexanol, 7,5 g SiH-Vernetzer und 1,25 g Pt-haltige Siloxanpartikel aus Beispiel 2 zu einer Siliconmasse vermischt, wobei es sich bei dem SiH-Vernetzer um ein Mischpolymerisat aus Dimethylsiloxy-, Methylhydrogensiloxy- und Trimethylsiloxy-Einheiten mit einer Viskosität von 320 mPa*s bei 25°C und einem Gehalt an Si-gebundenem Wasserstoff von 0,48 Gew.-% handelte. Der Pt-Gehalt der Siliconmasse betrug 5 ppm.

### Beispiel 16

Die Herstellung erfolgte wie im Beispiel 15 beschrieben, jedoch wurden 0,735 g der in Beispiel 3 hergestellten Pt-haltigen Siloxanpartikel verwendet.

### Beispiel 17

Die Herstellung erfolgte wie im Beispiel 15 beschrieben, jedoch wurden 1,79 g der in Beispiel 4 hergestellten Pt-haltigen Siloxanpartikel verwendet.

### Beispiel 18

Die Herstellung erfolgte wie im Beispiel 15 beschrieben, jedoch wurden 0,694 g der in Beispiel 5 hergestellten Pt-haltigen Siloxanpartikel verwendet.

### Beispiel 19

Die Herstellung erfolgte wie im Beispiel 15 beschrieben, jedoch wurden 1,19 g der in Beispiel 6 hergestellten Pt-haltigen Siloxanpartikel verwendet.

### Beispiel 20

Die Herstellung erfolgte wie im Beispiel 15 beschrieben, jedoch wurden 1,14 g der in Beispiel 7 hergestellten Pt-haltigen Siloxanpartikel verwendet.

### Beispiel 21 (nicht erfindungsgemäß)

Die Herstellung erfolgte wie im Beispiel 15 beschrieben, jedoch wurden 96 mg des in Beispiel 1 hergestellten Platin-Divinyltetramethyldisiloxan-Komplexes verwendet.

Die thermischen Vernetzungscharakteristiken der Siliconmassen der Beispiele 8 bis 21 wurden mit einem Goettfert-Elastograph gemessen. Zur quantitativen Ermittlung der Lagerbarkeit wurden die hergestellten Formulierungen bei Raumtemperatur und 50°C gelagert, wobei die Zeitdauer (gemessen in Tagen) bis zur Verdoppelung des Anfangswerts der Viskosität ermittelt wurde. Die Meßergebnisse sind in Tabelle 1 dargestellt.

**Tabelle 1:**

| | Bsp. 8 | Bsp. 9 | Bsp. 10 | Bsp. 11 | Bsp. 12 | Bsp. 13 | Bsp. 14 |
|---|---|---|---|---|---|---|---|
| a_{T} [°C] | 129 | 130 | 127 | 135 | 132 | 134 | 116 |
| t₉₀ [s] | 31 | 30 | 28 | 42 | 34 | 33 | 25 |
| Lagerung bei RT [d] | > 90 | > 90 | 41 | > 90 | > 90 | > 90 | 10 d |
| Lagerung bei 50°C [d] | 28 | 26 | 9 | 35 | 24 | 37 | <1 d |
| | Bsp. 15 | Bsp. 16 | Bsp. 17 | Bsp. 18 | Bsp. 19 | Bsp. 20 | Bsp. 21 |
| a_{T}[°C] | 124 | 124 | 120 | 136 | 126 | 131 | 112 |
| t₉₀ [s] | 27 | 28 | 25 | 44 | 26 | 35 | 22 |
| Lagerung bei RT [d] | > 90 | > 90 | 27 | > 90 | > 90 | > 90 | 8 d |
| Lagerung bei 50°C [d] | 35 | 30 | 7 | 39 | 32 | 40 | <1 d |

| | | | | | | | |
|---|---|---|---|---|---|---|---|
| a_{T} Anspringtemperatur | | | | | | | |
| d Tage s Sekunden | | | | | | | |

Die Anspringtemperatur a_{T} wurde mit einer Heizrate von 10 K/min bestimmt. Die Temperatur die dem 4%-Wert des maximalen Drehmomentes entspricht wurde als Anspringtemperatur definiert.

Die Bestimmung des t₉₀-Wertes erfolgte nach DIN 53529 T3. Die Dauer vom Beginn der Härtung bis 90% (t₉₀-Wert) des maximalen Drehmoments wurde dabei bei 180°C ermittelt.

Die Herstellung der vernetzten Siliconelastomere erfolgte dadurch, daß die Mischung des jeweiligen Beispiels in einer hydraulischen Presse bei einer Temperatur von 170°C während 10 min zum Siliconelastomer vernetzt wurde. Die entformten ca. 2 mm bzw. 6 mm dicken Siliconelastomerfolien wurden mechanischen Prüfungen unterworfen. Die Meßwerte können Tabelle 2 entnommen werden.

**Tabelle 2**

| | Härte [Shore A] | RF [N/mm²] | RD [%] | WRW [N/mm] | RP [%] |
|---|---|---|---|---|---|
| Beispiel 8 | 49 | 9,1 | 600 | 28 | 59 |
| Beispiel 9 | 48 | 8,7 | 630 | 26 | 61 |
| Beispiel 10 | 49 | 9,0 | 610 | 27 | 61 |
| Bespiel 11 | 43 | 8,1 | 680 | 24 | 58 |
| Beispiel 12 | 47 | 8,9 | 590 | 27 | 60 |
| Beispiel 13 | 49 | 9,0 | 580 | 28 | 59 |
| Bespiel 14 | 50 | 9,2 | 590 | 29 | 58 |
| Beispiel 15 | 38 | 12,6 | 1180 | 49 | 49 |
| Beispiel 16 | 36 | 12,5 | 1190 | 48 | 50 |
| Beispiel 17 | 37 | 13,1 | 1090 | 48 | 52 |
| Beispiel 18 | 32 | 12,2 | 1250 | 45 | 48 |
| Beispiel 19 | 36 | 12,8 | 1150 | 48 | 50 |
| Beispiel 20 | 37 | 12,7 | 1120 | 48 | 51 |
| Beispiel 21 | 38 | 13,0 | 1130 | 51 | 50 |

Härte gemäß DIN 53505
Reißfestigkeit (RF) gemäß DIN 53504-S1
Reißdehnung (RD) gemäß DIN 53504-S1
Weiterreißwiderstand (WRW) gemäß ASTM D 624
Rückprallelastizität (RP) gemäß DIN 53512

Wie aus Tabelle 2 ersichtlich ist, werden die mechanischen Eigenschaften der Siliconelastomere durch Verwendung geeigneter Pt-haltiger Siloxanpartikel-Katalysatoren kaum verändert.

## Patentansprüche

1. Hydrosilylierungskatalysator (H) und Organopolysiloxan (O) enthaltende Organopolysiloxanpartikel mit einer Partikelgröße von 0,01 - 10 *µ*m, die zumindest in der äußersten Schale keine Glasübergangs-, Erweichungs- und Schmelztemperatur im Bereich von 20 - 250°C aufweisen, bei denen das Organopolysiloxan (O) der Organopolysiloxanpartikel aufgebaut ist aus
0 bis 40,0 Gew.-% Einheiten der allgemeinen Formel
[R₃SiO_{1/2}] **(1),**
0 bis 95,0 Gew.-% Einheiten der allgemeinen Formel
[R₂SiO_{2/2}] **(2),**
0 bis 100 Gew.-% Einheiten der allgemeinen Formel
[RSiO_{3/2}] **(3)**
und
0 bis 60,0 Gew.-% Einheiten der allgemeinen Formel
[SiO_{4/2}] **(4),**
wobei
**R** gleiche oder verschiedene einwertige SiC-gebundene, gegebenenfalls substituierte C₁- bis C₁₈- Kohlenwasserstoffreste bedeutet,
mit der Maßgabe, daß 10 bis 98 Mol-% der Reste **R** aus Phenylgruppen bestehen und, daß in den Einheiten der allgemeinen Formeln (1) bis (4) zusammen höchstens 10 Gew.-% nicht kondensierte Reste ≡Si-OH und nicht hydrolysierte Reste ≡Si-OR¹ vorhanden sein können, wobei
**R**^{**1**} gleiche oder verschiedene einwertige SiOC-gebundene, gegebenenfalls substituierte C₁- bis C₈- Kohlenwasserstoffoxyreste bedeutet.

2. Organopolysiloxanpartikel nach Anspruch 1, bei denen die Summe der Einheiten der allgemeinen Formeln (3) und (4) mindestens 5,0 Gew.-% des Organopolysiloxanbestandteils (O) beträgt.

3. Organopolysiloxanpartikel nach Anspruch 1 oder 2, bei denen das Gewicht an Metall, welches im Hydrosilylierungskatalysator (H) vorliegt, 0,01-4 Gew.-%, bezogen auf das Gewicht der Partikel beträgt.

4. Einkomponentige additionsvernetzende hitzehärtbare Siliconmasse, welche die Bestandteile
(I) alkenylfunktionelles Polyorganosiloxan
(II) SiH-funktionelles Vernetzungsmittel und
(III) die Hydrosilylierungskatalysatoren (H) und Organopolysiloxan (O) enthaltende Organopolysiloxanpartikel gemäß Anspruch 1 umfaßt.

5. Siliconmasse nach Anspruch 4, bei welcher der Gehalt an Organopolysiloxanpartikeln (III) so gewählt wird, daß die Siliconmasse einen Pt-Gehalt von 0,1-100 ppm besitzt.

## Claims

1. Organopolysiloxane particles containing a hydrosilylation catalyst (H) and an organopolysiloxane (O) and having a particle size of 0.01 - 10 µm and having, at least in the outermost shell, no glass-transition temperature, softening point or melting point in the range 20 - 250°C, in which the organopolysiloxane (O) of the organopolysiloxane particles is built up from
from 0 to 40.0% by weight of units of the general formula
[R₃SiO_{1/2}] **(1)**
from 0 to 95.0% by weight of units of the general formula
[R₂SiO_{2/2}] **(2)**
from 0 to 100% by weight of units of the general formula
[RSiO_{3/2}] **(3),**
and
from 0 to 60.0% by weight of units of the general formula
[SiO_{4/2}] **(4),**
where
**R** are identical or different monovalent, SiC-bonded, optionally substituted C₁- to C₁₈-hydrocarbon radicals,
with the proviso that 10 to 98 mol% of the radicals **R** comprise phenyl groups and that the units of the general formulae (1) to (4) together contain at most 10% by weight of uncondensed radicals ≡Si-OH and unhydrolysed radicals ≡Si-OR¹, where
**R**^{**1**} are identical or different monovalent, SiOC-bonded, optionally substituted C₁- to C₈- hydrocarbonoxy radicals.

2. Organopolysiloxane particles according to Claim 1, in which the total number of units of the general formulae (3) and (4) is at least 5.0% by weight of the organopolysiloxane constituent (O).

3. Organopolysiloxane particles according to Claim 1 or 2, in which the weight of metal present in the hydrosilylation catalyst (H) is 0.01 - 4% by weight, based on the weight of the particles.

4. One-component, addition-crosslinking, thermo-curable silicone composition which comprises the constituents
(I) alkenyl-functional polyorganosiloxane,
(II) SiH-functional crosslinking agent, and
(III) organopolysiloxane particles containing the hydrosilylation catalysts (H) and organopolysiloxane (O) according to Claim 1.

5. Silicone composition according to Claim 4, in which the content of organopolysiloxane particles (III) is selected so that the silicone composition has a Pt content of 0.1 - 100 ppm.

## Revendications

1. Particules d'organopolysiloxane comprenant un catalyseur d'hydrosilylation (H) et un organopolysiloxane (O), ayant une taille de particules de 0,01 à 10 µm et ne présentant pas, au moins dans la coquille la plus externe, de température de transition vitreuse, de température de ramolissement et de température de fusion dans la gamme de 20 à 250°C, dans lesquelles l'organopolysiloxane (O) des particules d'organopolysiloxane est composé
de 0 à 40,0% en poids de motifs de formule générale
[R₃SiO_{1/2}] (1),
de 0 à 95,0% en poids de motifs de formule générale
[R₂SiO_{2/2}] (2),
de 0 à 100% en poids de motifs de formule générale
[RSiO_{3/2}] (3)
et
de 0 à 60,0% en poids de motifs de formule générale
[SiO_{4/2}] (4),
dans lesquelles
R représente des radicaux hydrocarbonés monovalents en C₁ à C₁₈, identiques ou différents, liés à SiC et éventuellement substitués,
à condition que de 10 à 98% en moles des radicaux R soient constitués de groupes phényle, et que dans les motifs de formules générales (1) à (4), au total au plus 10% en poids de radicaux non condensés ≡Si-OH et de radicaux non hydrolisés ≡Si-OR¹ puissent être présents, où
R¹ représente des radicaux hydrocarbone-oxy monovalents en C₁ à C₈, identiques ou différents, liés à SiOC et éventuellement substitués.

2. Particules d'organopolysiloxane selon la revendication 1, dans lesquelles la somme des motifs de formules générales (3) et (4) est d'au moins 5,0% en poids du constituant organopolysiloxane (O).

3. Particules d'organopolysiloxane selon la revendication 1 ou 2, dans lesquelles le poids de métal présent dans le catalyseur d'hydrosilylation (H) est de 0,01 à 4% en poids, par rapport au poids des particules.

4. Composition siliconée monocomposant, réticulant par addition et durcissable à la chaleur, comprenant les constituants
(I) un polyorganosiloxane à fonction alcényle
(II) un agent de réticulation à fonction SiH, et
(III) des particules d'organopolysiloxane comprenant les catalyseurs d'hydrosilylation (H) et l'organopolysiloxane (O) selon la revendication 1.

5. Composition siliconée selon la revendication 4, dans laquelle la teneur en particules d'organopolysiloxane (III) est choisie de telle sorte que la composition siliconée présente une teneur en Pt de 0,1 à 100 ppm.
